**Europäisches Patentamt**

**European Patent Office**

**Office européen des brevets**

(19)

(11) Veröffentlichungsnummer: **0 037 553**
**B1**

(12) # EUROPÄISCHE PATENTSCHRIFT

(45) Veröffentlichungstag der Patentschrift:
**15.02.84**

(21) Anmeldenummer: **81102443.9**

(22) Anmeldetag: **01.04.81**

(51) Int. Cl.³: **F 24 F 11/00,** F 24 F 13/14,
A 01 K 1/00

(54) **Belüftungsklappe bzw. -tür für Räume, Ställe od. dgl.**

(30) Priorität: **03.04.80 DE 8009383 U**

(43) Veröffentlichungstag der Anmeldung:
**14.10.81 Patentblatt 81/41**

(45) Bekanntmachung des Hinweises auf die Patenterteilung:
**15.02.84 Patentblatt 84/7**

(84) Benannte Vertragsstaaten:
**AT DE FR NL**

(56) Entgegenhaltungen:
**CH - A - 519 146**
**DE - C - 91 210**
**FR - A - 2 342 446**
**US - A - 4 056 048**

(73) Patentinhaber: **Jawork, Heinrich, D-8412 Burglengenfeld (DE)**

(72) Erfinder: **Jawork, Heinrich, D-8412 Burglengenfeld (DE)**

(74) Vertreter: **Betten, Jürgen, Dipl.-Ing., Patentanwälte Lieck & Betten Maximiliansplatz 10, D-8000 München 2 (DE)**

Belüftungsklappe bzw. -tür für Räume, Ställe oder dergleichen

Die Erfindung betrifft eine Belüftungsklappe bzw. -tür für Räume, Ställe oder dergleichen, in denen gegenüber dem Aussendruck ein Über- oder Unterdruck, d.h. ein Druckgefälle herrscht, wobei die Klappe bzw. Tür im geschlossenen Zustand an mindestens einem in der Wand eingesetzten Anschlag anliegt und in dieser Stellung durch eine Haltevorrichtung gehalten wird.

Die Notbelüftung von Räumen, Ställen od. dgl., in denen gegenüber dem Aussendruck ein Über- oder Unterdruck herrscht, stellt ein grosses Problem dar. Insbesondere bei der Intensiv-Tierhaltung kommt es darauf an, dass bei Stromausfall und einem damit verbundenen Ausfall der Ventilatoren möglichst schnell eine Notbelüftung erfolgt. Andernfalls verenden die Tiere innerhalb kurzer Zeit.

Üblicherweise werden bei Ausfall des Stromes die Belüftungsklappen von Hand geöffnet. Wird der Stromausfall jedoch nicht sofort bemerkt, so kann es für die Tiere bereits zu spät sein. Andererseits gibt es bereits komplizierte und teuere elektronische Einrichtungen, die bei einem Stromausfall ein Öffnen der Belüftungsklappen bewirken. Allerdings werden hier die Belüftungsklappen auch dann geöffnet, wenn lediglich eine kurze Stromunterbrechung, beispielsweise durch einen Blitz, erfolgt.

Eine Belüftungsklappe der oben beschriebenen Art ist aus der FR-A-2 342 446 für ein Kernkraftwerk bekannt. Dabei wird die um eine etwas aussermittige horizontale Achse drehbar gelagerte Klappe durch ein Verriegelungselement gehalten. Durch die Masse bzw. die Exzentrizität des Verriegelungselements bezüglich der Achse wird der Wert bestimmt, den der Druck bzw. Unterdruck erreichen muss, um die Klappe zu öffnen. Wesentlich hierbei ist die Tatsache, dass die Klappe allein durch den einen bestimmten Wert überschreitenden Druck bzw. Unterdruck geöffnet wird. Eine derartige Belüftungsvorrichtung macht jedoch eine genaue Einstellung bzw. Bemessung der Verriegelungsvorrichtung erforderlich, deren Funktion zudem leicht durch Schmutz und Umwelteinflüsse beeinträchtigt werden kann.

Weiterhin ist aus der CH-A-519 146 ein Notbelüftungsgerät bekannt, bei dem eine Luftaustrittsöffnung von einer schwenkbaren Verschlussplatte bedeckt ist, die wiederum von einer elektrisch betätigbaren Haltevorrichtung gehalten wird. Bei Stromausfall wird die Haltevorrichtung ausgelöst. Die Verschlussplatte fällt sofort herunter und lässt den von einem Notbelüftungssystem gelieferten Luftstrom durch. Dieses Notbelüftungsgerät hat den Nachteil, dass die Verschlussplatte auch bei einer kurzen Stromunterbrechung herunterfällt.

Demgegenüber hat die Erfindung die Aufgabe, die eingangs beschriebene Belüftungsklappe bzw. -tür so zu verbessern, dass sie bei einem längeren Stromausfall mit Sicherheit öffnet und eine einfache und billige Konstruktion aufweist, deren Funktion durch Schmutz und Umwelteinflüsse nicht beeinträchtigt wird.

Diese Aufgabe wird dadurch gelöst, dass der Anschlag als durchgehender Rahmen ausgebildet ist, die Klappe am Rahmen gelagert und durch das Druckgefälle an diesen gedrückt wird, dass mindestens ein Teil der elektrisch betätigbaren Haltevorrichtung am Rahmen angebracht und die Haltevorrichtung so betätigbar ist, dass sie die Klappe bei Stromausfall freigibt, wobei die Klappe erst bei Abnahme des Druckgefälles unter einen bestimmten Wert geöffnet wird.

Durch diese Ausführungsform der Belüftungsklappe wird erreicht, dass diese eine besonders einfache und billige Konstruktion aufweist und sie im Notfall mit Sicherheit öffnet. Zum einen wird die Klappe bei Stromausfall wohl durch die elektrisch betätigbare Haltevorrichtung freigegeben. Zum anderen fällt die Klappe bei einer kurzen Stromunterbrechung, die noch nicht zu einer entsprechenden Abnahme des Druckgefälles führt, jedoch noch nicht herunter, da die Klappe durch das Druckgefälle an den Rahmen gedrückt wird.

Weitere vorteilhafte Ausführungsformen der Erfindung sind in den Ansprüchen 2 bis 8 beschrieben. Da der Elektromagnet keine eigentliche Haltefunktion erfüllt, kann er auch sehr schwach ausgebildet sein, so dass er praktisch keinen Restmagnetismus besitzt.

Das Einstellen des Zeitpunktes nach dem Stromausfall, zu dem die Klappe — nach Absinken des Unterdrucks auf einen bestimmten Wert — herunterfallen soll, kann durch das Anbringen eines verschiebbaren Gewichts an der Klappe gemäss Anspruch 2 oder durch eine schräge oder aussermittige Lagerung gemäss Anspruch 3 erfolgen. Gleiches wird durch die Federn oder Angeln gemäss Anspruch 4 erreicht, durch die die Klappe bzw. Tür aufgedrückt bzw. aufgezogen wird.

Ausführungsformen der Erfindung werden anhand der Zeichnungen näher beschrieben. Es zeigen:

Figur 1 eine perspektivische Darstellung des Einbaukastens mit heruntergefallener Belüftungsklappe;

Figur 2 eine Querschnittsansicht einer ersten Ausführungsform der Erfindung, bei der im Innenraum ein Unterdruck herrscht;

Figur 3 eine zweite Ausführungsform der Erfindung, bei der im Innenraum ein Überdruck herrscht;

Figuren 4 A, B Querschnittsansichten im Detail, eines an der Klappe angebrachten verschiebbaren Gewichts, und

Figuren 5 A, B Querschnittsansichten einer weiteren Ausführungsform der Erfindung, bei der das metallische Gegenstück zum Elektromagneten als Fallstift ausgebildet ist.

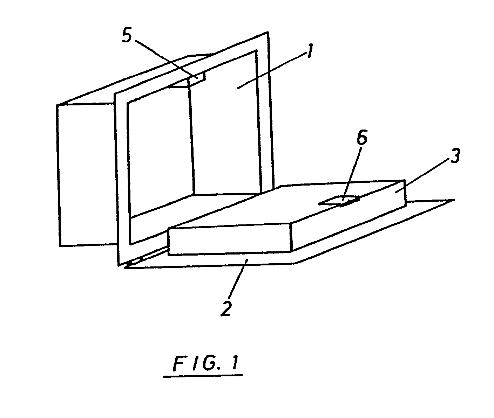

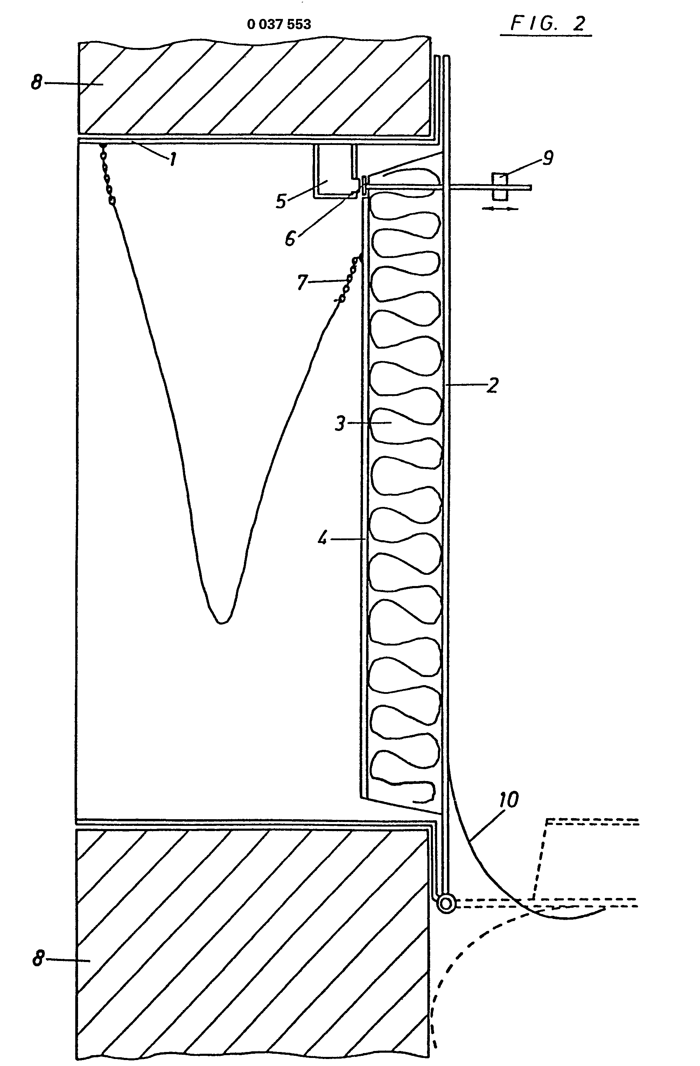

Fig. 1 zeigt eine perspektivische Darstellung einer Ausführungsform der Erfindung, bei der an der Unterseite eines in die Wand einsetzbaren Einbaukastens oder Rahmens 1 eine Belüftungsklappe 2 gelagert ist. Zur Wärmedämmung ist auf der Belüftungsklappe Styropor 3 aufgebracht. Auf der Styropor-Schicht 3 befindet sich noch eine Schicht 4 zur Zerstreuung des Lichtes im ganzen Raum, was am besten aus Fig. 2 zu ersehen ist. Am Einbaukasten ist ein Elektromagnet 5 und entsprechend dazu an der Belüftungsklappe ein metallisches Gegenstück 6 angebracht. Weiterhin ist an der Belüftungsklappe eine Kette 7 angebracht, durch die die Belüftungsklappe hochziehbar und entsprechend an dem Einbaukasten 1 befestigbar ist.

Fig. 2 zeigt den Einbaukasten 1 in seiner in eine Wand 8 eingebauten Stellung. Dabei ist die Belüftungsklappe sowohl in der geschlossenen als auch in der geöffneten Stellung dargestellt. Dabei weist die Belüftungsklappe ein auf einer an der Klappe befestigten Stange angebrachtes Gewicht 9 auf, das in Richtung der Pfeile verschiebbar ist. Durch die Verschiebung des Gewichtes kann der Schwerpunkt der Belüftungsklappe entsprechend verändert werden. Ausserdem weist die Belüftungsklappe eine Haltefeder 10 auf, durch die die heruntergefallene Belüftungsklappe 2 gegen die Wand 8 abgestützt wird.

Bei der in Fig. 2 dargestellten Ausführungsform herrscht in dem Raum oder Stall links von der Wand 8 ein Unterdruck, der die Belüftungsklappe 2 in der geschlossenen Stellung gegen den Einbaukasten 1 drückt. Ausserdem wird die Belüftungsklappe durch den am Einbaukasten angebrachten Elektromagneten 5 sowie ein entsprechend an der Belüftungsklappe 2 angebrachtes metallisches Gegenstück 6 gehalten. Bei Stromausfall gibt der Elektromagnet 5 das Gegenstück 6 frei und die Klappe 2 fällt dann bei einem Abfallen des Unterdrucks herab. Die beiden Stellungen der Belüftungsklappe 2 sind in Fig. 2 dargestellt. Durch ein Verstellen des verschiebbaren Gewichts 9 kann erreicht werden, dass die Belüftungsklappe nicht sofort nach Stromausfall öffnet, sondern erst nach einem Absinken des Unterdrucks auf einen bestimmten Wert.

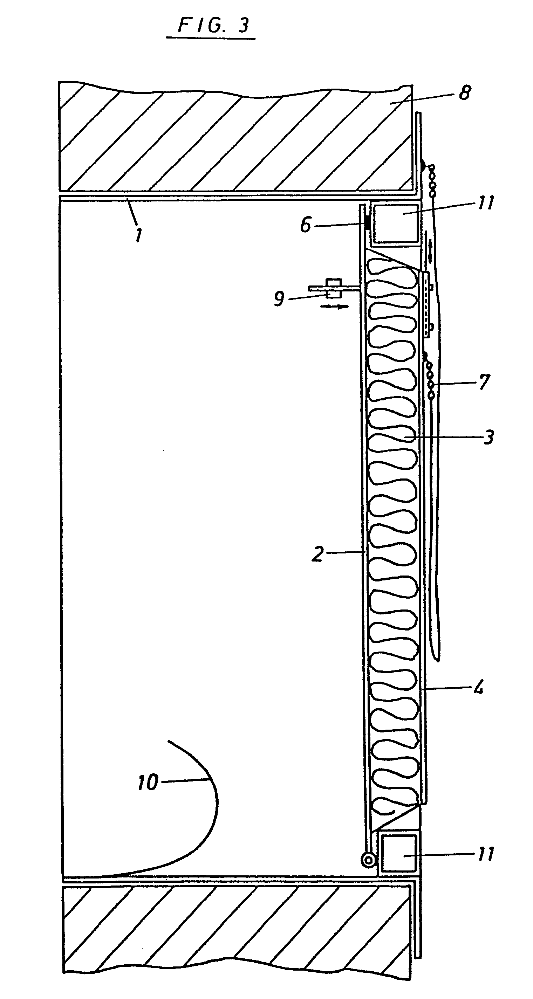

Bei der in Fig. 3 dargestellten Ausführungsform der Erfindung herrscht im Raum links von der Wand 8 ein Überdruck und die Belüftungsklappe 2 fällt bei Absinken des Überdrucks nach innen herunter. Bei dieser Konstruktion weist der Einbaukasten einen zusätzlichen Rahmen 11 auf, an dem sich der Elektromagnet 5 befindet. Auch hier ist ein entsprechend verschiebbares Gewicht 9 an der Belüftungsklappe 2 befestigt.

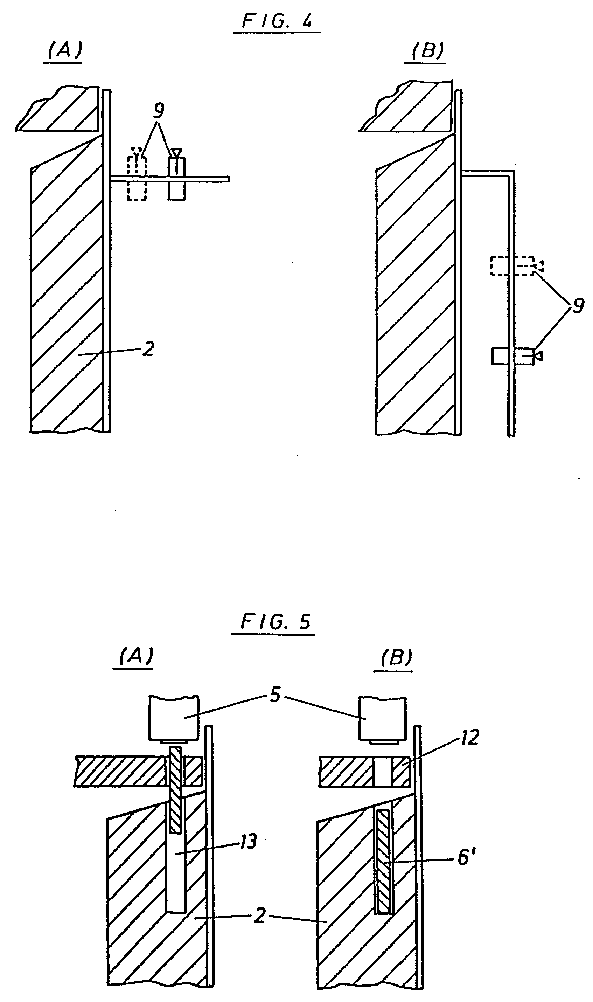

Die Fig. 4 A und 4 B zeigen verschiedene Ausführungsformen der Anbringung des verschiebbaren Gewichts 9 an die Belüftungsklappe 2. Dabei ist das Gewicht im Falle von Fig. 4 A in waagrechter und im Falle von 4 B in senkrechter Richtung verschiebbar.

Das Einstellen des Zeitpunktes nach dem Stromausfall, zu dem die Klappe — nach Absinken des Unterdrucks auf einen bestimmten Wert — herunterfallen soll, kann auch durch entsprechend angebrachte Federn, mehrere Gewichte oder aber durch entsprechend schrägen Einbau der Klappe im Rahmen erfolgen. Dabei haben diese Bauteile bzw. der schräge Einbau lediglich die Aufgabe, den noch vorhandenen Restmagnetismus sowie die Totlage der Klappe zu überwinden.

Fig. 5 A, B zeigt eine weitere Ausführungsform der Erfindung. Hier befindet sich zwischen Elektromagnet 5 und Belüftungsklappe 2 noch eine Lasche 12 aus Aluminiumblech, die ein Loch bzw. einen Schlitz aufweist. Bei dieser Ausführungsform ist das metallische Gegenstück als Fallstift 6' ausgebildet, der einerseits im geschlossenen Zustand der Belüftungsklappe 2, vom Elektromagneten 5 angezogen wird und damit die Belüftungsklappe verriegelt. Bei Stromausfall gibt der Elektromagnet 5 den Fallstift 6' frei und dieser fällt in ein Loch bzw. einen Schlitz 13, der entsprechend in der Belüftungsklappe 2 ausgebildet ist.

Die erfindungsgemässe Belüftungsklappe kann auch als Tür ausgebildet sein, die durch den Unter- bzw. Überdruck gegen einen Rahmen gedrückt wird. In diesem Fall sind entsprechend am Rahmen und der Tür befestigte Angeln oder Federn erforderlich, die bei Stromausfall die Tür aufziehen bzw. aufdrücken.

**Patentansprüche**

1. Belüftungsklappe bzw. -tür für Räume, Ställe oder dergleichen, in denen gegenüber dem Aussendruck ein Über- oder Unterdruck, d.h. ein Druckgefälle herrscht, wobei die Klappe bzw. Tür (2) im geschlossenen Zustand an mindestens einem in der Wand eingesetzten Anschlag (1) anliegt und in dieser Stellung durch eine Haltevorrichtung (5, 6) gehalten wird, dadurch gekennzeichnet, dass der Anschlag als durchgehender Rahmen (1) ausgebildet ist, die Klappe (2) am Rahmen (1) gelagert und durch das Druckgefälle an diesen gedrückt wird, dass mindestens ein Teil (5) der elektrisch betätigbaren Haltevorrichtung (5, 6) am Rahmen (1) angebracht und die Haltevorrichtung (5, 6) so betätigbar ist, dass sie die Klappe (2) bei Stromausfall freigibt, wobei die Klappe (2) erst bei Abnahme des Druckgefälles unter einen bestimmten Wert geöffnet wird.

2. Klappe nach Anspruch 1, dadurch gekennzeichnet, dass an der Klappe (2) ein verschiebbares Gewicht (9) angebracht ist, durch das der Schwerpunkt der Klappe (2) veränderbar ist.

3. Klappe nach Anspruch 1, dadurch gekennzeichnet, dass sie derart schräg oder aussermittig am Rahmen (1) gelagert ist, dass sie bei Stromausfall und Abnahme des Druckgefälles unter einen bestimmten Wert herunterfällt.

4. Klappe nach Anspruch 1, dadurch gekennzeichnet, dass sie durch im Rahmen gelagerte Federn oder Angeln bei Stromausfall und Abnahme des Druckgefälles unter einen bestimmten Wert aufziehbar bzw. aufdrückbar ist.

5. Klappe nach einem der Ansprüche 1 bis 4, dadurch gekennzeichnet, dass die elektrisch betätigbare Haltevorrichtung aus einem Elektromagneten (5) und einem an der Klappe bzw. Tür (2) angebrachten metallischen Gegenstand (6) besteht.

6. Klappe nach Anspruch 5, dadurch gekennzeichnet, dass der Elektromagnet (5) oben am Rahmen (1) angebracht und das metallische Gegenstück als Stift (6') ausgebildet ist, der bei Stromausfall in ein entsprechend in der Klappe (2) ausgebildetes Loch bzw. Schlitz (12) fällt und bei Rückkehr des Stroms vom Elektromagneten (5) angezogen wird.

7. Klappe nach einem der Ansprüche 1 bis 6, dadurch gekennzeichnet, dass an der Klappe (2) eine Kette (7) angebracht ist, durch die die Klappe (2) hochziehbar und befestigbar ist.

8. Klappe nach Anspruch 1, dadurch gekennzeichnet, dass an der Klappe eine Haltefeder (10) angebracht ist, durch die die heruntergefallene Klappe (2) gegen die Wand (8) abgestützt wird.

## Revendications

1. Volet ou porte d'aération pour des enceintes, étables ou analogues dans lesquelles règne, par rapport à la pression externe, une supression ou une dépression, c'est-à-dire un gradient de pression, le volet ou la porte (2) prenant appui, en position fermée, sur au moins une butée (1) encastrée dans le mur, et étant maintenu(e) dans cette position par un dispositif de maintien (5, 6) caractérisé(e) en ce que la butée est formée d'un cadre (1) continu, en ce que le volet (2) est articulé sur le cadre (1) et pressé contre celui-ci par l'effet du gradient de pression, en ce qu'au moins une partie (5) du dispositif de maintien (5, 6) susceptible d'être actionné électriquement est montée sur le cadre (1), et en ce que le dispositif de maintien (5, 6) est susceptible d'être actionné de façon telle qu'il libère le volet (2) lorsque le courant est interrompu, le volet (2) n'étant ouvert que lorsque le gradient de pression chute au-dessous d'une valeur déterminée.

2. Volet selon la revendication 1, caractérisé en ce que le volet (2) est pourvu d'un poids (9) déplaçable susceptible de modifier le centre de gravité du volet (2).

3. Volet selon la revendication 1, caractérisé en ce qu'il est articulé sur le cadre (1) obliquement ou de manière décentrée, de façon telle qu'il tombe lorsque le courant est interrompu et que le gradient de pression chute au-dessous d'une valeur déterminée.

4. Volet selon la revendication 1, caractérisé en ce qu'il est susceptible d'être relevé ou poussé vers le haut par l'action de ressorts ou de gonds lorsque le courant est interrompu et que le gradient de pression chute au-dessous d'une valeur déterminée.

5. Volet selon une des revendications 1 à 4, caractérisé en ce que le dispositif de maintien susceptible d'être actionné électriquement est constitué par un électro-aimant (5) et un objet métallique (6) fixé sur le volet ou la porte (2).

6. Volet selon la revendication 5, caractérisé en ce que l'électro-aimant (6) est fixé en haut sur le cadre (1) et que l'objet métallique associé est formé d'un goujon (6') qui pénètre dans un trou ou une fente (12) ménagé(e) de manière appropriée dans le volet (2), et qui est attiré par l'électro-aimant (5) lorsque le courant est rétabli.

7. Volet selon une des revendications 1 à 6, caractérisé en ce qu'une chaîne (7) est disposée sur le volet (2) de manière à permettre de relever et fixer le volet (2).

8. Volet selon la revendication 1, caractérisé en ce qu'un ressort de maintien (10) est disposé sur le volet de manière à permettre au volet (2) tombé de prendre appui sur le mur (8).

## Claims

1. Ventilating flap or door for rooms, stables or the like, being under a pressure higher or lower than the pressure at the exterior, i.e. showing a differential pressure; the flap or door (2), when closed, resting on at least one abutment member (1) installed in the wall, and held in this position by means of a retaining device (5, 6), characterized in that the abutment member is formed as a continuous frame (1), the flap (2) is carried by the frame (1) and is pressed against it by the differential pressure, a portion (5) at least of the electrically operated retaining device (5, 6) is attached to the frame (1), and the retaining device (5, 6) is able to be operated in such a manner that it releases the flap (2) in the case of a power failure, the flap (2) being opened only upon decrease of the differential pressure below a predetermined value.

2. Flap according to claim 1, characterized in that a slidable mass (9) is arranged on the flap (2) and is operable to change the centre of gravity of the flap (2).

3. Flap according to claim 1, characterized in that it is obliquely or eccentrically mounted on the frame (1) in a manner such that it will fall down upon power failure and decrease of the differential pressure below a predetermined value.

4. Flap according to claim 1, characterized in that it can be pulled open or, as the case may be, pushed open upon power failure and decrease of the differential pressure below a predetermined value, by means of springs or hinges arranged on the frame.

5. Flap according to any one of claims 1 to 4, characterized in that the electrically operated retaining device comprises an electro-magnet (5) and a metal member (6) attached to the flap or door (2).

6. Flap according to claim 5, characterized in that the electro-magnet (5) is attached to a top portion of the frame (1), and the cooperating metal member has the form of a pin (6') which, upon power failure, drops into a hole or slot (12) formed to match in the flap (2), and is attracted by the electro-magnet (5) upon recovery of the power supply.

7. Flap according to any one of claims 1 to 6, characterized in that a chain (7) is attached to the flap (2), said chain enabling the flap (2) to be pulled up and fixed in position.

8. Flap according to claim 1, characterized in that a supporting spring (10) is mounted on the flap to support the dropped-down flap (2) against the wall (8).

$FIG. 1$

*FIG. 2*

0 037 553

## F I G. 3

*F I G. 4*

*(A)*     *(B)*

*9*

*2*

*9*

*F I G. 5*

*(A)*     *(B)*

*5*

*12*

*13*

*6'*

*2*